# EUROPEAN PATENT APPLICATION

(11) **EP 4 170 341 A1**
(43) Date of publication of application: **26.04.2023**
(21) Application number: 21204423.4
(22) Date of filing: 25.10.2021
(51) Int. Cl.: G01N 30/86, G01N 30/88, G01N 30/52, G01N 30/46, G01N 30/78, G01N 30/54

(54) **GAS CHROMATOGRAPHY INSTRUMENT FOR DETERMINING A CONCENTRATION OF A VOLATILE MARKER**

(71) Applicant: Koninklijke Philips N.V., 5656 AG Eindhoven (NL)
(72) Inventor: VERSCHUEREN, Alwin Rogier Martijn, Eindhoven (NL)
(74) Representative: Philips Intellectual Property & Standards

(57) **Abstract**

The invention relates to a gas chromatography instrument 2 for determining a concentration of a volatile marker. The instrument 2 comprises a first chromatographic column 8 and a first detector 12. It has been found that retention times and peak heights of all compounds in a chromatogram are not universal constants of nature, but depend strongly on many parameters, like the column dimensions, materials and operating conditions. By utilizing an additional detector 22 or an additional chromatographic column 24, wherein the additional detector 22 differs from the first detector 12 by a detector property and/or the additional chromatographic column 24 differs from the first chromatographic column 8 by a column property, these redundancies can be exploited to determine a reliable consensus concentration value for the marker and allows for determining a confidence level thereof.

## Description

### FIELD OF THE INVENTION

The invention relates to a gas chromatography instrument, method and computer program for determining a concentration of a volatile marker.

### BACKGROUND OF THE INVENTION

A gas chromatography instrument is a well-known instrument for detecting and determining a concentration of gas compounds. It consists of a chromatographic column that has the ability to separate a mixture of gasses into individual components, and a detector that outputs a signal depending on the concentration and/or type of gas that passes through it.

A chromatographic column is limited in the number of gas compounds it can separate. Typically, this scales with the square root of the length of the column. That means that for the shorter length columns, which are beneficial for so-called process gas chromatographs, and even more for micro gas chromatographs, the recorded chromatogram will not merely consist of isolated peaks, but rather a superposition of partially or fully overlapping peaks. This means that it may become difficult to identify the actual peak corresponding the marker of interest, and determine the peak area of the marker of interest, corrected for the overlapping contributions of the neighboring peaks. This results in inaccuracies and even errors in the determination of the marker concentration.

### SUMMARY OF THE INVENTION

It is an object of the present invention to provide a gas chromatography instrument, method and computer program for determining a concentration of a volatile marker more accurately.

In a first aspect, a gas chromatography instrument for determining a concentration of a volatile marker is presented. The instrument comprises a sampling device, a first chromatographic column, a process flow path connecting the sampling device to the chromatographic column, and a first detector connected to the first chromatographic column, wherein the chromatography instrument comprises at least one of the following: an additional detector, an additional chromatographic column, wherein the additional detector differs from the first detector by a detector property and/or the additional chromatographic column differs from the first chromatographic column by a column property.

It has been found that retention times and peak heights of all compounds in a chromatogram are not universal constants of nature, but depend strongly on many parameters, like the column dimensions, materials and operating conditions. By combining the concentration determinations from multiple non-identical chromatographic conditions, their redundancies can be exploited to determine a reliable consensus concentration value for the marker and allows for determining a confidence level thereof.

In a preferred embodiment, the gas chromatography instrument further comprises a sample flow path configured to guide a fluid to be sampled to the sampling device, and a valve arrangement for connecting either of the sample flow path or the process flow path to the sampling device, wherein in a sampling mode, the sampling device is connected to the sample flow path, and in an analysis mode, the process flow path and the chromatographic column are connected to the sampling device. The fluid may either be gas or a liquid which is converted into gas.

The gas sampling device is preferentially configured as one of the following: sample loop, thermal desorber. Sample loops are widely available with commercial gas chromatography instruments. It has been realized that a thermal desorber allows splitting the absorbed sample into multiple fractions injected into the column during consecutive chromatographic runs. In this way, the thermal desorber allows to generate multiple, in particular sequential, chromatographic conditions, even when using a single sample, single column and single detector.

The column property can be at least one of the following: column dimension, in particular any of or a combination of column length, column diameter, column film thickness, column material, column operating condition, in particular any of or a combination of column temperature, column pressure, column flow-rate. The underlying principle of this multiple column embodiment is that it allows the creation of multiple chromatographic conditions with different peak patterns, such that the marker concentration can be determined independently from each condition. This allows more robustness and confidence in the final concentration estimate.

The detector property can be at least one of the following: detector principle, sensing material, sensor-operating conditions. Preferably, the first detector is connected to the additional detector in parallel or in series. In this regard, it has been realized that no detector exists that has a universal sensitivity for all gas compounds, in the sense of a universal conversion factor of peak area to ppb concentration independent of the gas compound. Therefore, two non-identical detectors will give a different information, different peak heights for different compounds. Hence, even when a first detector already gives the information to allow determination of marker concentration, there is a benefit of adding a second, in particular non-identical, detector, because this adds different information. From the combination of these two detectors, the combined information, a more reliable determination of the marker concentration can be obtained.

According to one embodiment, the first column is connected to the additional column in parallel or in series. The additional column can be connected to the first detector. The additional column can be connected to a second detector.

In another aspect of the present invention, a method for determining a concentration of a volatile marker using gas chromatography is presented, the method comprising: providing a first chromatogram under a first chromatographic condition, providing a second chromatogram under a second chromatographic condition, wherein the second chromatographic condition differs from the first chromatographic condition, identifying a peak corresponding to the marker within each chromatogram, determining a peak area and/or peak height of the peak corresponding to the marker for each chromatogram, determining an estimate of the marker concentration based on a peak area and/or peak height for a known marker concentration using predetermined calibration information for each chromatogram, determining a consensus value for the marker concentration from the two estimates of the marker concentrations from the two chromatograms.

In other words, for both chromatographic conditions the markers of interest are fitted at the expected peak positions taking into account the expected peak widths from their calibration chromatograms. From the comparison between determined marker concentrations of both chromatograms, a robust estimate can be made of the marker concentration and confidence level thereof.

The first and second different chromatographic conditions can be established by utilizing a single sample and non-identical detectors for each chromatographic condition. Preferably, the non-identical detectors are connected in parallel with one another or in series with one another.

The first and second different chromatographic conditions can be established by utilizing a single sample and non-identical columns for each chromatographic condition. Preferably, for each non-identical column, a separate detector is utilized and/or a common detector is utilized for two non-identical columns. The columns can be connected in parallel with one another or in series with one another.

In an embodiment, the first and second different chromatographic conditions are established by utilizing a single sample and multiple sequential injections, for instance from a thermal desorber, wherein for each sequential injection a chromatogram is determined.

In a further embodiment, the first and second different chromatographic conditions are established by utilizing multiple sequential samples and different operating conditions. The different operating conditions can be characterized by at least one of the following: injection condition, column flow rate, column pressure rate, column temperature, detector operating condition, for instance temperature of sensing layer in detector based on chemoresistive sensing principle.

Preferably, the identification of the peak corresponding to a marker is based upon pre-determined calibration information. In an embodiment, the pre-determined calibration information comprises peak retention time, and peak conversion factor.

In this regard, the peak retention time is the time duration between injecting the sample into the column and its maximum response measured in the detector. This retention time depends on the type of gas compound, such as polar/non polar, boiling point, material of column, for instance polarity of stationary phase, dimensions of column, flowrate through column and temperature, in particular dynamic temperature, of column. The peak conversion factor h, in particular the peak area per marker concentration, denotes the detector sensitivity of the detector for that specific marker.

Preferably, the pre-determined calibration information further comprises at least one of the following: peak width of a Gaussian standard deviation, time constant of the exponential peak broadening. In one embodiment, the method comprises determining a confidence level for the consensus value of the marker concentration.

The peak width results from diffusional broadening within the column, typically proportional to the square root of the peak retention time. The exponentially broadening time constant can result from the gas volume inside the detector, that behaves as an Continuous stirred-tank reactor (CSTR), so even with marker entering as ideal spike waveform, in particular Dirac spike waveform, the concentration inside the detector volume follows an exponential decay with time constant, given by detector volume divided by volumetric flow-rate. In practice, especially for short columns, like micro-gas chromatographs, the exponential broadening time constant will be significant compared to the Gaussian peak width.

In a further aspect of the present invention, a gas chromatography instrument is presented. The instrument comprises a providing unit configured for providing a first chromatogram under a first chromatographic condition, and for providing a second chromatogram under a second chromatographic condition, wherein the second chromatographic condition differs from the first chromatographic condition and a processor configured to carry out the steps of the method as defined in any of claims 6 to 13.

In yet another aspect, a computer program for determining a concentration of a marker in a sample is presented, the computer program comprising program code means for causing a computer to carry out the steps of the method as defined in any of claims 6 to 13.

It shall be understood that the gas chromatography instrument of claims 1 and 14, the method for determining a concentration of a volatile marker using gas chromatography of claim 6, and the computer program of claim 15, have similar and/or identical preferred embodiments, in particular, as defined in the dependent claims.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
Fig. 1 shows schematically and exemplarily an embodiment of a gas chromatography instrument for determining a concentration of a volatile marker,
Fig. 2 shows schematically and exemplarily an alternative embodiment of a gas chromatography instrument for determining a concentration of a volatile marker,
Fig. 3 illustrates a further embodiment of a gas chromatography instrument in an alternative configuration,
Fig. 4 shows schematically and exemplarily a further embodiment of a gas chromatography instrument,
Fig. 5 illustrates another embodiment of a gas chromatography instrument for determining a concentration of a volatile marker,
Fig. 6 shows yet another exemplarily embodiment of a gas chromatography instrument,
Fig. 7 illustrates a method for determining a concentration of a volatile marker using gas chromatography,
Fig. 8 illustrates an alternative embodiment of a gas chromatography instrument,
Fig. 9 shows sample chromatograms a-d obtained with multiple detectors illustrating the method according to the invention,
Fig. 10 shows sample chromatograms a-d obtained with multiple columns illustrating the method according to the invention,
Fig. 11 shows sample chromatograms a-d obtained with multiple injections illustrating the method according to the invention,
Fig. 12 shows sample chromatograms a-d obtained with multiple samples illustrating the method according to the invention,
Fig. 13 shows alternative sample chromatograms a-d obtained with multiple samples illustrating the method according to the invention.

### DETAILED DESCRIPTION OF EMBODIMENTS

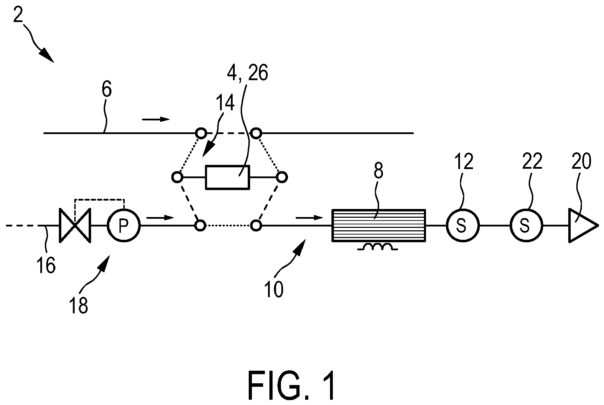

Fig. 1 shows a first embodiment of a gas chromatography instrument 2 for determining a concentration of a volatile marker exemplarily and schematically. The gas chromatography instrument 2 allows for continuous gas mixture monitoring in industrial processes. The gas chromatography instrument 2 comprises a sampling device 4 which is configured as a sample loop 26. The sample loop 26 comprises a defined inner volume that can be switched between two modes utilizing a valve arrangement 14: A sampling mode and an analysis mode. In the sampling mode, the sample loop 26 is connected to a sample flow path 6. This is shown in Fig. 1 with the help of the dotted lines. When the valve arrangement 14 is switched into the analysis mode, the sample loop 26 is connected to a first chromatographic column 8. This is illustrated in Fig. 1 with the help of the dashed lines. The gas chromatography instrument 2 is operated as follows:
The valve arrangement 14 is initially switched to the sampling mode meaning that gas to be sampled is routed though the sample loop 26. After sufficient time that the composition of the gas inside the sample loop 26 has become representative for the gas to be analyzed, the valve arrangement 14 is switched to the analysis mode. By means of a pressure controller 18 carrier gas supplied by a carrier gas source 16 transports a gas sample inside the sample loop 26 into the first chromatographic column 8 by means of a process flow path 10, where the gas sample is split into gas compounds, in particular by interactions with the stationary phase of the column 8 that exit the column 8 at different moments in time, and is recorded by a first detector 12.

The first detector 12 provides a first chromatogram under a first chromatographic condition. The first detector 12 is connected to a second detector 22. The second detector 22 provides a second chromatogram under a second chromatographic condition. In other words, the first detector 12 and the second detector 22 output non-identical signals. The second detector 22 is connected to a gas outlet 20.

For example, the detectors 12, 22 can be selected from different types of detectors, such as photo ionization, flame ionization, chemoresistive, amperometric, thermal conductivity, capacitive, or from the same type but based on different materials, in case of chemoresistive and amperometric detectors, or even from the same type and same materials but operated under different conditions, for example two identical chemoresistive detectors operated on different hot plate temperatures.

The first detector 12 and the second detector 22 are arranged in series. In the first embodiment, only a single sample, a single column 8 and single chromatographic separation is required to generate the first chromatogram under a first chromatographic condition and the second chromatogram under the second chromatographic condition.

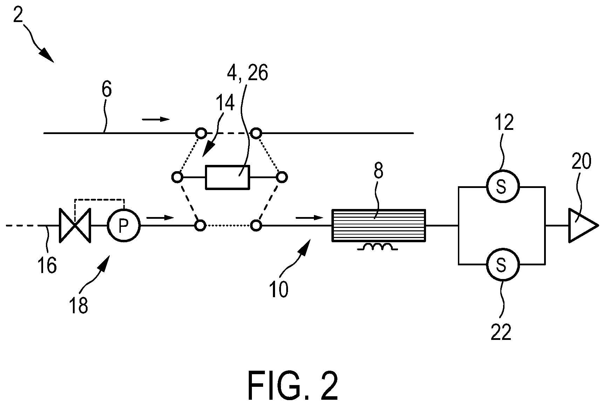

Fig. 2 shows an alternative embodiment of the gas chromatography instrument 2, which is similar to the embodiment presented in Fig. 1. The major difference between the embodiments of Fig. 1 and Fig. 2 is that the first detector 12 and the second detector 22 of Fig. 2 are connected in parallel. Again, the first detector 12 and the second detector 22 differ with regard to a detector property, such as the type of detector, the utilized materials or the operating conditions as explained with reference to Fig. 1. The first detector 12 and the second detector 22 are connected to a gas outlet 20.

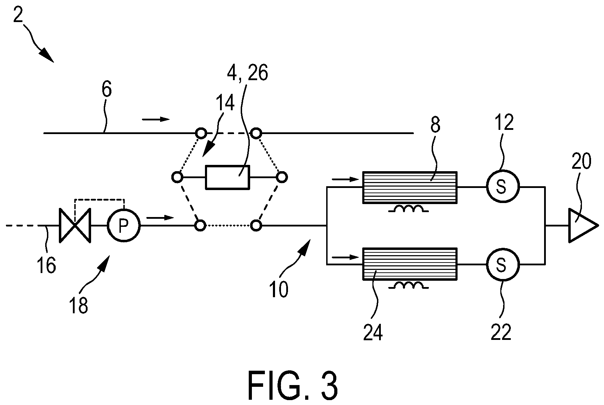

Fig. 3 illustrates an alternative embodiment of a gas chromatography instrument 2, wherein the instrument 2 comprises at least two columns 8, 24, namely a first chromatography column 8 and a second chromatography column 24. In the embodiment of Fig. 3, the first chromatography column 8 is connected in parallel to the second chromatographic column 24. The first chromatographic column 8 is connected to a first detector 12. The second chromatographic column 24 is connected to a second detector 22. The first detector 12 and the second detector 22 are connected to a gas outlet 20.

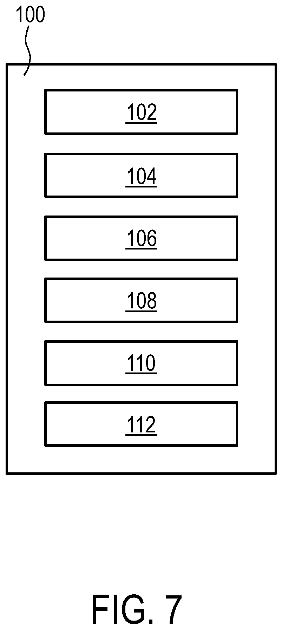

The underlying principle of the embodiment shown in Fig. 3 is that it allows the creation of multiple chromatographic conditions with different peak patterns, such that the marker concentration can be determined independently from each condition, to allow more robustness and confidence in the final concentration estimated as will be described with reference to, in particular Fig. 7.

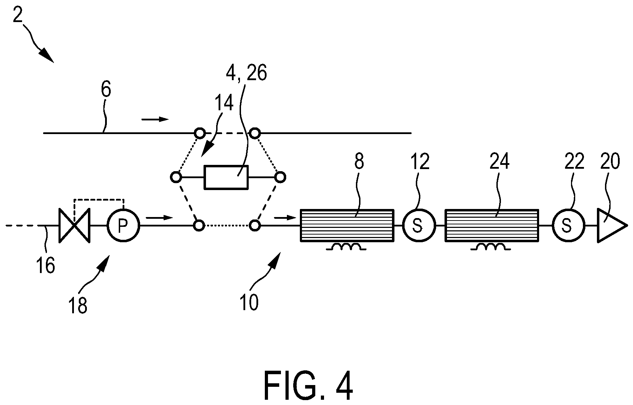

Fig. 4 shows an alternative embodiment of a gas chromatography instrument 2 utilizing multiple columns 8, 24. In the embodiment of Fig. 4, the first chromatographic column 8 is connected to the sample loop 26. Furthermore, the first chromatographic column 8 is connected to a first detector 12. The first detector 12 is connected to a second chromatographic column 24. The second chromatographic column 24 is connected to the second detector 22. The second detector 22 is connected to the gas outlet 20. In other words, compared to the embodiment of Fig. 3, the columns 8, 24 and detectors 12, 22 are connected in series. In the embodiments of Fig. 3 and 4, the first detector 12 is different from the second detector 22 and the first chromatographic column 8 is different from the second chromatographic column 24. The embodiment of Fig. 4 benefits from a higher limit of detection, since the sampled gasses are not split into two streams, but the full sample amount is available from both detectors.

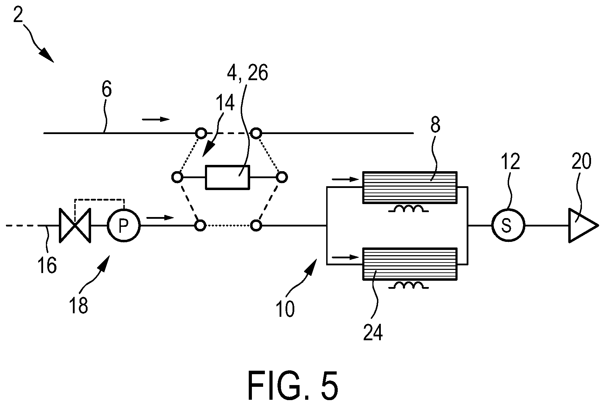

Fig. 5 shows another alternative multiple column embodiment comprising a first chromatographic column 8 and a second chromatographic column 24. Both chromatographic columns 8, 24 are connected to a common detector 12 which is - in turn - connected to the gas outlet 20. The columns 8, 24 may differ with regard to their column dimension, in particular column length, column diameter or column film thickness, a column material or column operating conditions, in particular column temperature, column pressure or column flow-rate. A major advantage of the embodiment of Fig. 5 is that the overall instrument costs are reduced because only a single detector 12 is needed. The different chromatographic conditions are generated by utilizing different sections of a chromatogram recorded by the common detector 12.

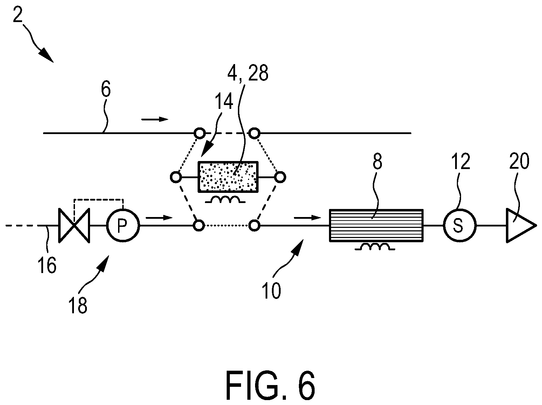

Fig. 6 shows an alternative embodiment of a gas chromatographic instrument 2, wherein instead of the sample loop 26 of Figs. 1 - 5, a thermal desorber 28 is used. When the valve arrangement 14 is switched into the sampling mode (indicated by the dotted lines) the sample gas flow is routed through the thermal desorber 28. The thermal desorber 28, when operated at ambient temperature, captures and stores a range of volatile compounds from the input gas flow. After sampling the desired volume of gas, the valve arrangement 14 that is configured as a six-port-valve, is switched into an analysis position indicated by the dashed lines. In the analysis position, carrier gas that is supplied by the carrier gas source 16 is routed through the thermal desorber 28 towards a first chromatographic column 8. By rapidly heating the thermal desorber 28 to a certain set point temperature, compounds previously absorbed during the sampling phase will be desorbed and injected into the chromatographic column 8.

The range of volatile compounds that are desorbed depends on the actual set point temperature. Generally, volatile compounds with a higher boiling point need a higher temperature to be desorbed from the sorbents than compounds with a lower boiling point. It has been realized that the thermal desorber 28 allows splitting the absorbed sample into multiple fractions injected into the chromatographic column 8 during consecutive chromatographic runs.

In this way, the thermal desorber 28 allows to generate multiple or sequential chromatographic conditions, even using a single sample, single column 8 and single detector 12. The operation principle of the instrument 2 as disclosed in the embodiment of Fig. 6 is as follows:
The process starts with transferring a sample into the thermal desorber 28. Then, as injection condition A, part of the captured sample is injected into the chromatographic column 8, for instance by heating the thermal desorber 28 to a temperature of 100°C. Then, the resulting chromatogram A is recorded by the detector 12. Afterwards, as injection condition B, a further part of the captured sample is injected into the column, for instance by heating the thermal desorber 28 to a temperature of 150°C. The resulting chromatogram B is recorded by the detector.

Fig. 7 illustrates an embodiment of a method 100 for determining a concentration of a volatile marker using gas chromatography. The method 100 comprises the step providing 102 a first chromatogram under a first chromatographic condition and providing 104 a second chromatogram under a second chromatographic condition, wherein the second chromatographic condition differs from the first chromatographic condition. The first chromatographic condition may differ from the second chromatographic condition by utilizing a single sample and non-identical detectors for each of the chromatographic conditions. Alternatively, the different chromatographic conditions may be established by utilizing a single sample and non-identical columns for each chromatographic condition. For each non-identical column a separate detector may be utilized or a common detector may be utilized for two non-identical columns.

The first and second different chromatographic conditions may alternatively also be established by utilizing a single sample and multiple sequential injections wherein for each sequential injection a chromatogram is determined. Alternatively, the first and second different chromatographic conditions may be established by utilizing multiple sequential samples and different operating conditions. The different operating conditions may be characterized by injection conditions, column flow rates, column pressure rates, column temperatures, or detector operating conditions, for instance hotplate temperature of chemoresistive sensor.

The method 100 furthermore comprises the step identifying 106 a peak corresponding to the marker within each chromatogram. The identification 106 of the peak may be based on pre-determined calibration information. The pre-determined calibration information may contain for each of the chromatographic conditions a peak retention time, a peak width, in particular a peak width of the Gaussian standard deviation and preferably the time constant of the exponential peak broadening.

The method 100 furthermore comprises the step determining 108 a peak area and/or peak height of the peak associated with the marker for each chromatogram, and determining 110 an estimate of the marker concentration based on a peak area and/or height for a known marker concentration using predetermined calibration information for each chromatogram. The method 100 furthermore comprises the step of determining 112 a consensus value for the marker concentration from the two estimates of the marker concentrations from the two chromatograms.

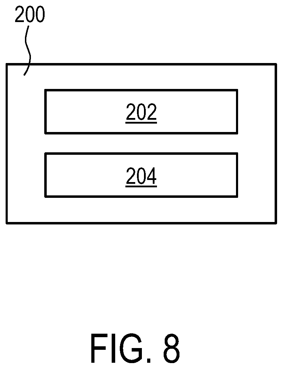

Fig. 8 shows an alternative embodiment of a chromatography instrument 200. The chromatography instrument 200 comprises a providing unit 202. The providing unit 202 is configured for providing a first chromatogram under a first chromatographic condition, and for providing a second chromatogram under a second chromatographic condition, wherein the second chromatographic condition differs from the first chromatographic condition.

It needs to be noted that the term "providing" is to be understood such that the chromatograms are either determined with the help of the instrument itself or are provided to the instrument from an external source. The chromatography instrument 200 furthermore comprises a processor 204. The processor 204 is configured to carry out the steps of the method as defined in any of claims 6 - 13, in particular to carry out the steps of the method as show in Fig. 7.

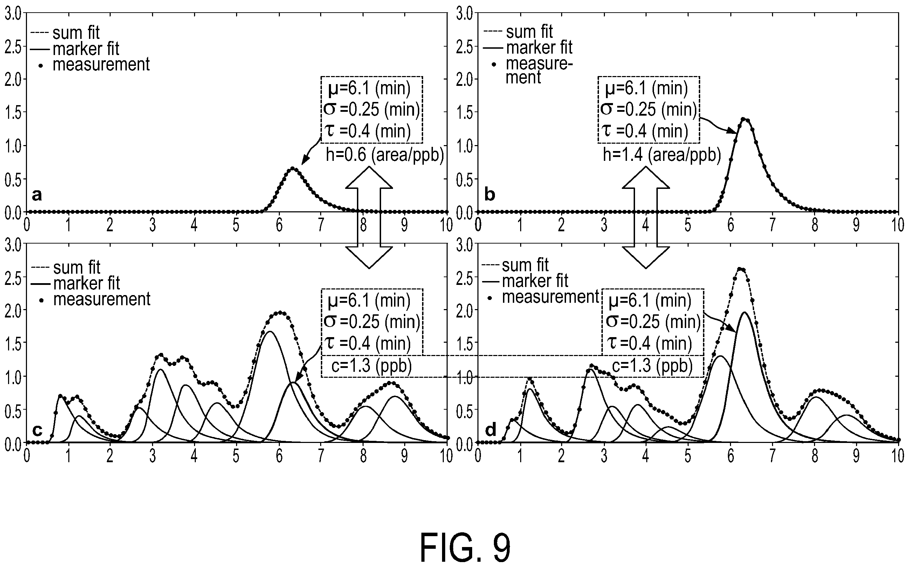

Fig. 9 shows sample chromatograms a-d illustrating the method according to the invention for the embodiment shown in Fig. 1. Panels a and b indicate chromatograms recorded with detector A (left, detector 12 in Fig. 1) and B (right, detector 22 in Fig. 1) for a sample containing purely the marker of interest (with a known concentration, in this case 1 molar part-per-billion).

The resulting marker peaks recorded in chromatograms A and B are defined by four properties:
- Peak retention time µ: the time duration between injecting the sample into the column and its maximum response measured in the detector. This retention time depends on the type of gas, for example polar/non polar, boiling point, material of column, for instance polarity of stationary phase, dimensions of column, flowrate through column and temperature of column, in particular dynamic temperature of column.
- Gaussian peak width σ: this results from diffusional broadening within the column, typically proportional to the square root of the peak retention time.
- Exponentially broadening time constant τ: this can result from the gas volume inside the detector, that behaves as an Continuous stirred-tank reactor (CSTR), so even with marker entering as ideal (Dirac) spike waveform, the concentration inside the detector volume follows an exponential decay with time constant τ, given by detector volume divided by volumetric flow-rate. In practice, especially for short columns the exponential broadening time constant will be significant compared to the Gaussian peak width σ.
- Peak conversion factor h, in particular peak area per marker concentration, or alternatively peak height per marker concentration, denotes the detector sensitivity of the detector for that specific marker.

Typically when two non-identical detectors A and B are used, most likely the sensitivities will differ, possibly also the time constants, and retention times differ, but Gaussian peak widths are typically equal to each other.

The remaining two panels c and d of Fig. 9 depict the chromatograms A and B resulting from a gas sample containing a mixture of components including the aforementioned marker. Panels c and d correspond to the same sample and same column, but differ because of the unequal sensitivities between detectors A and B to the various components inside the sample.

These are typical examples of chromatograms obtained with a short column instruments, where compounds show at least partially overlapping peaks. The challenge is to determine the concentration of the marker of interest, so contribution of the marker to the total recorded chromatogram. By the way, most detectors have a linear output, meaning their output for a mixture equals a summation of the outputs that would result if all individual components would be measured separately.

In this example, from the calibration chromatograms, it is known that the marker of interest has a retention time of 6.1 minutes. The true concentration of the marker is 1.3 ppb.

The fitting approach according to the invention is illustrated now with regard to panels c and d. In the identification of the marker in the sample chromatogram, not only the expected retention time is considered, but also the expected Gaussian and exponential peak widths. Therefore, it follows to try fitting the 6 min sample region with two exponentially broadened Gaussians, of which one has the exact same peak parameters as the calibrated marker. The fit depicted in panel c contains a peak with exactly the retention time, Gaussian and exponential peak widths as expected from the calibration in a. Likewise, the fit depicted in panel d contains a peak identical to the calibration in b. Moreover, the success of these two fits can be concluded by comparing their resulting concentrations, which perfectly match to 1.3 ppb.

An alternative strategy trying to fit the peak around 6 minutes by a single exponentially broadened Gaussian has been found to be inaccurate.

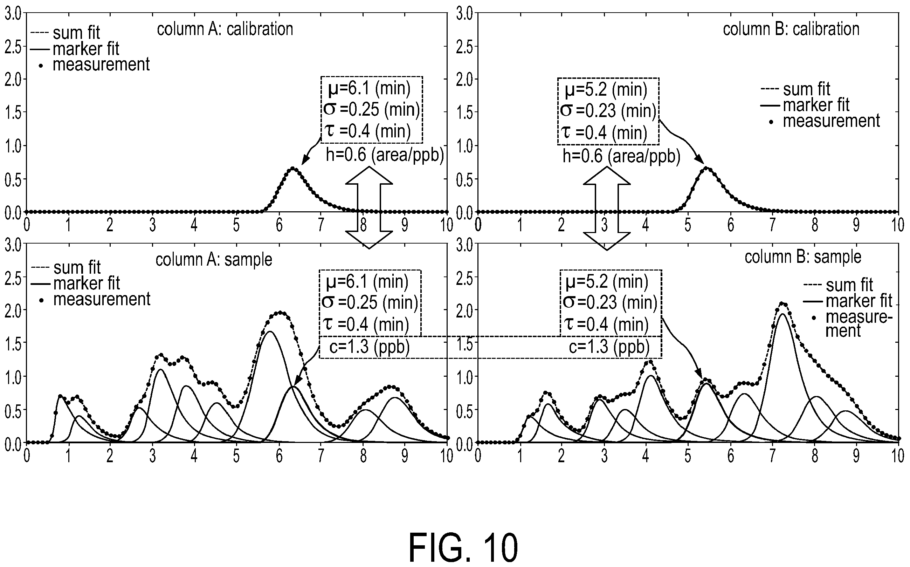

Fig. 10 shows sample chromatograms obtained with different columns illustrating the method according to the invention. In the top panels, it can be seen that the column material affects both the retention time and Gaussian peak width of the marker of interest. So clearly the retention times, and even relative elution order, of most compounds is different between column A and column B. This maximizes the chance that if under condition A there is an overlapping peak masking the marker of interest then under condition B - when both the marker and the masking peaks shift - by chance the marker peak is more isolated from the surrounding peaks.

The method used in this embodiment is in line with the generic method of this invention: for both conditions, in this case both columns, the markers of interest are fitted at the expected peak positions and taking into account the expected peak widths, from their calibration chromatograms. From the comparison between determined marker concentrations of both chromatograms, a robust estimate can be made of the marker concentration and confidence level thereof.

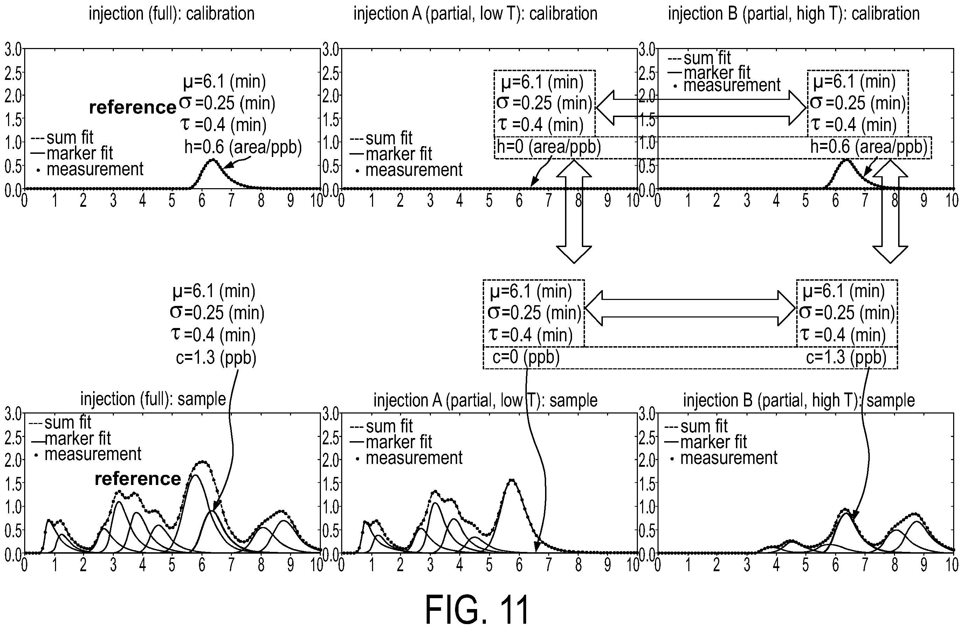

Fig. 11 shows sample chromatograms a-d obtained with multiple injections illustrating the method according to the invention. The two panels on the left shows the same marker and sample, in particular mixture, as used in the previous embodiments. In this reference case, the sample captured in the thermal desorber of figure 6 is completely injected into the column in a single injection event at sufficiently high temperature.

In the remaining panels of Fig. 11, the two injection conditions A and B are illustrated. Injection condition A occurs at low temperature, resulting in a partial injection of compounds from the thermal desorber into the column. In the bottom-middle panel, it can be observed that under that especially low temperature injection condition A the compounds with low retention times are desorbed, which are typically the compounds with lower boiling points. The compounds with higher retention times, including the marker of interest, apparently remain inside the thermal desorber during injection A, but are subsequently desorbed during the high temperature injection condition B. Notice some intermediary compounds are partly desorbed in condition A and partly in condition B.

According to the method of invention, prior to use on samples, the instrument needs calibration on the markers of interest. This means, executing the exact chromatographic conditions on a sample consisting of purely the marker of interest in a known concentration. The resulting calibration chromatographs under injection conditions A and B are depicted on the top right panels. Here it can be seen, that for this particular example, the marker of interest is not desorbed in condition A. What is important in the final step of the method is to assess whether the split of the marker between the two injections A and B in the measured sample is consistent with the split during calibration. That will enhance the confidence level of the determined concentration.

An added benefit of this approach is that per chromatographic run the total number of compounds is reduced, allowing for easier fitting of peaks. Optionally and beneficially, the column operating conditions corresponding to the subsequent injection conditions may differ, for instance to be optimized for compounds with low boiling points resulting injection A during the recording of chromatogram A. In addition, similar for high boiling compounds during injection B. In that case, different from the example in Fig. 11, there is no need that the marker fits in injection A and B share the same parameters for retention time and peak widths. From calibration under the exact same column operating conditions, the marker parameters will be known. In addition, following the general method of this invention, those will be used for fitting of the marker peaks in sample chromatograms.

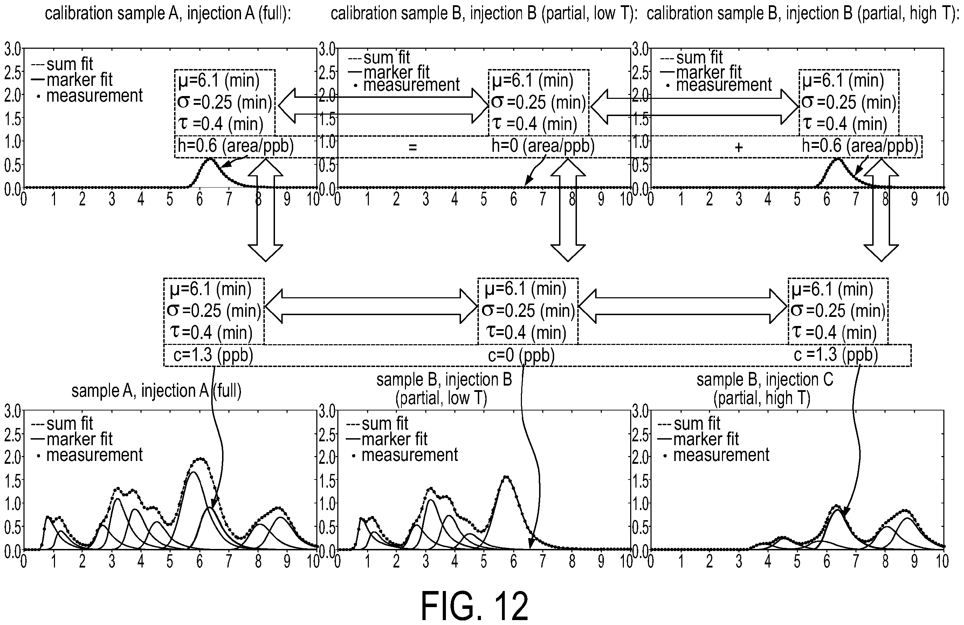

Fig. 12 shows sample chromatograms obtained with multiple samples illustrating the method according to the invention. In this embodiment, the multiple non-identical chromatographic conditions are realized by analyzing sequential samples under different conditions.

For known instruments that can autonomously capture and analyze gas samples, for instance the indoor air of a greenhouse or barn, an additional sample is easily accessible. In addition, given that for a short column the analysis time proceeds within minutes, the subsequent sample will be likely have a very comparable composition. The benefit of this embodiment is cost effectiveness, since there are no double elements needed in the device architecture, meaning a single column and single detector suffice.

It is required that the two subsequent samples, ideally of identical composition, are analyzed under different conditions, for example different injection conditions A vs. B, and/or different column operating conditions A vs B, including pressure/flow and temperature conditions, and/or different detector operating conditions A vs B, including hotplate temperature setting in a chemoresistive sensor.

For both cases, example chromatograms are shown in Fig. 12. The chromatograms are generated as follows: The method starts with transferring sample A into the injector, for instance the thermal sorbent. Then, the sample is injected into the column, resulting in chromatographic condition A. Directly after injecting the sample A into the column, so already before all sample components have eluted from the column, a second sample B can be transferred into the injector again. Then, preferably when the column is empty again, a new injection can take place into the column, resulting in chromatographic condition B. The remaining steps are identical to the earlier embodiments.

Ideally, sample A and B will have an equal composition. This is practically feasible since the two samples can be acquired without a long delay: before all components of sample A have eluted from the column, already a second sample B can be transferred into the injector again.

For the case where the subsequent chromatographic conditions differ only in the injection conditions, an example is given in Figure 12. The example of Figure 12 resembles that of Figure 11. In this example a first sample A is fully injected into the column (injection condition A). Subsequent sample B is splitted over two partial injections B at low thermal desorption temperature and C at high temperature. This results in 3 chromatograms, where for each the marker concentration can be determined and consistency can be assessed based on the corresponding calibration measurements. In this example, if the fitted marker concentration of sample A equals that of the sum of two fitted marker concentrations of sample B, and moreover the two fitted marker concentrations of sample B have relative values consistent with the calibration, then the confidence level in the determined concentrations will be high.

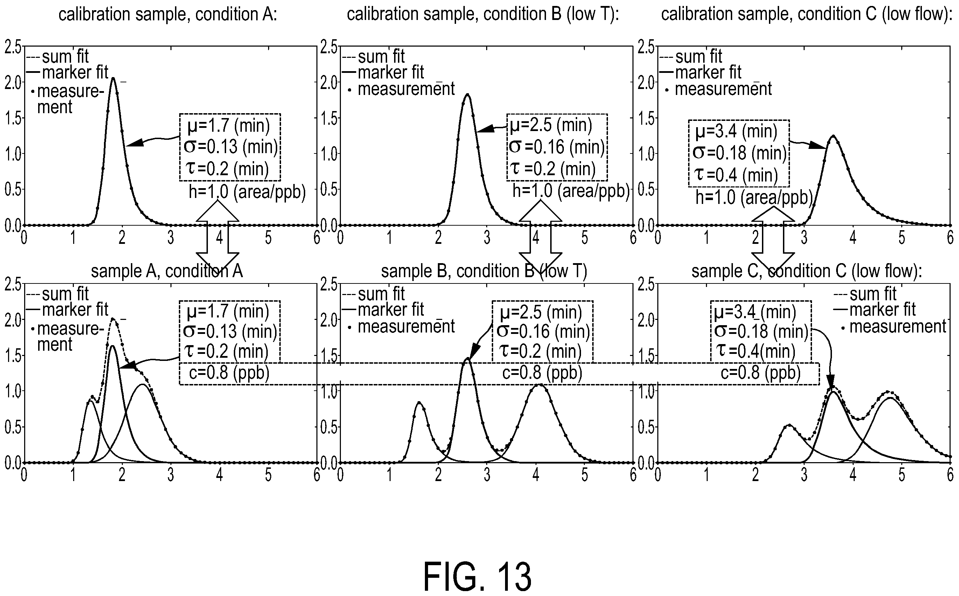

An alternative case, where the subsequent chromatographic conditions have equal injections but differ in the chromatographic operating conditions, such as column flow and temperature, is depicted in Figure 13.

In this example, three sequential samples A, B, C of same composition are analyzed under 3 different column operating conditions. Each sample consists of three compounds: oxolane, cyclohexane and dioxane. Condition A corresponds to a column linear velocity of 15 cm/s, and temperature of 50°C, resulting in the lowest retention times for the 3 compounds. Condition B corresponds to a column linear velocity of 15 cm/s, but a reduced column temperature of 30°C, resulting in a higher spread between the retention times of the three compounds. Condition C corresponds to the default column temperature of 50°C, but at a reduced linear velocity of 7.5 cm/s, causing all three retention times to increase.

In this example, cyclohexane is the marker of interest. Clearly, in case the peak fit parameters for cyclohexane (in all 3 samples A, B, C) match the parameters of the pure cyclohexane calibrations, and most importantly if the determined concentration values of cyclohexane in all three subsequent samples A, B, C give the same concentration value, this gives high confidence in consensus concentration value.

In this embodiment, the subsequent samples are deliberately analyzed under different conditions. This is different from the trivial case of reproduction measurements, where subsequent samples are analyzed under identical conditions. The benefit of the inventive method disclosed here, is that it yields concentration values with a higher degree of confidence than mere reproductions.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Procedures like providing a first chromatogram under a first chromatographic condition and providing a second chromatogram under a second chromatographic condition, or the mentioned identification or determination steps performed by one or several units or devices can be performed by any other number of units or devices. These procedures can be implemented as program code means of a computer program and/or as dedicated hardware.

A computer program may be stored/distributed on a suitable medium, such as an optical storage medium or a solid-state medium, supplied together with or as part of other hardware, but may also be distributed in other forms, such as via the Internet or other wired or wireless telecommunication systems.

Any reference signs in the claims should not be construed as limiting the scope.

The invention relates to a gas chromatography instrument for determining a concentration of a volatile marker. The instrument comprises a first chromatographic column and a first detector. It has been found that retention times and peak heights of all compounds in a chromatogram are not universal constants of nature, but depend strongly on many parameters, like the column dimensions, materials and operating conditions. By utilizing an additional detector or an additional chromatographic column, wherein the additional detector differs from the first detector by a detector property and/or the additional chromatographic column differs from the first chromatographic column by a column property, these redundancies can be exploited to determine a reliable consensus concentration value for the marker and allows for determining a confidence level thereof.

## Claims

1. Gas chromatography instrument (2) for determining a concentration of a volatile marker, the instrument (2) comprising:
- a sampling device (4),
- a first chromatographic column (8),
- a process flow path (10) connecting the sampling device (4) to the chromatographic column (8), and
- a first detector (12) connected to the first chromatographic column (8) wherein the chromatography instrument (2) further comprises at least one of the following:
- an additional detector (22),
- an additional chromatographic column (24), wherein the additional detector (22) differs from the first detector (12) by a detector property and/or the additional chromatographic column (24) differs from the first chromatographic column (8) by a column property.

2. The gas chromatography instrument (2) as defined by claim 1, further comprising:
- a sample flow path (6) configured to guide a fluid to be sampled to the sampling device (4),
- a valve arrangement (14) for connecting either of the sample flow path (6) or the process flow path (10) to the sampling device (4), wherein in a sampling mode, the sampling device (4) is connected to the sample flow path (6), and in an analysis mode, the process flow path (10) and the chromatographic column (8) are connected to the sampling device (4).

3. The gas chromatography instrument (2) as defined by claim 1 or 2, wherein the sampling device (4) is configured as one of the following:
- sample loop (26),
- thermal desorber (28).

4. The gas chromatography instrument (2) as defined by any of the preceding claims, wherein the column property is at least one of the following:
- column dimension,
- column material,
- column operating condition.

5. The gas chromatography instrument (2) as defined by any of the preceding claims, wherein the detector property is at least one of the following:
- detector principle,
- sensing material,
- sensor operating conditions.

6. Method (100) for determining a concentration of a volatile marker using gas chromatography, the method comprising:
- providing (102) a first chromatogram under a first chromatographic condition,
- providing (104) a second chromatogram under a second chromatographic condition, wherein the second chromatographic condition differs from the first chromatographic condition,
- identifying (106) a peak corresponding to the marker within each chromatogram,
- determining (108) a peak area and/or peak height of the peak corresponding to the marker for each chromatogram,
- determining (110) an estimate of the marker concentration based on a peak area and/or peak height for a known marker concentration using predetermined calibration information for each chromatogram,
- determining (112) a consensus value for the marker concentration from the two estimates of the marker concentrations from the two chromatograms.

7. The method (100) as defined by claim 6, wherein the first and second different chromatographic conditions are established by utilizing a single sample and multiple sequential injections, wherein for each sequential injection a chromatogram is determined.

8. The method (100) as defined by claim 6, wherein the first and second different chromatographic conditions are established by utilizing multiple sequential samples and different operating conditions.

9. The method (100) as defined by claim 8, wherein the different operating conditions are **characterized by** at least one of the following:
- injection condition,
- column flow rate,
- column pressure rate,
- column temperature,
- detector temperature.

10. The method (100) as defined by any of claims 6 to 9, wherein the identification of the peak corresponding to a marker is based upon pre-determined calibration information.

11. The method (100) as defined by any of claims 6 to 10, wherein the pre-determined calibration information comprises:
- peak retention time, and
- peak conversion factor.

12. The method (100) as defined by claim 11, wherein the pre-determined calibration information further comprises at least one of the following:
- peak width of a Gaussian standard deviation,
- time constant of the exponential peak broadening.

13. The method (100) as defined by any of claims 6 to 12, comprising:
- determining a confidence level for the consensus value of the marker concentration.

14. Gas chromatography instrument (200), the instrument comprising:
- a providing unit (202) configured for providing a first chromatogram under a first chromatographic condition, and for providing a second chromatogram under a second chromatographic condition, wherein the second chromatographic condition differs from the first chromatographic condition
- a processor (204) configured to carry out the steps of the method as defined in any of claims 6 to 13.

15. A computer program for determining a concentration of a marker in a sample, the computer program comprising program code means for causing a computer to carry out the steps of the method (100) as defined in any of claims 6 to 13.
